# NOUVEAU FASCICULE DE BREVET EUROPEEN

(11) **EP 1 400 537 B2**
(45) Date de publication et mention de la décision concernant l'opposition: **09.04.2014**
(45) Mention de la délivrance du brevet: 03.05.2006
(21) Numéro de dépôt: 03292238.7
(22) Date de dépôt: 11.09.2003
(51) Int. Cl.: C08B 30/04

(54) **Extraction des composants de la farine de pois**
Extrahierung von Komponenten aus Erbsenmehl
Extraction of the components from pea flour

(30) Priorité: 18.09.2002 FR 0211547
(43) Date de publication de la demande: 24.03.2004
(73) Titulaire: Roquette Frères, 62136 Lestrem (FR)
(72) Inventeur: Salome, Jean-Paul, 59232 Vieux Berquin (FR); Verrin, Jean-Marc, 62660 Beuvry-les-Bethune (FR); Fache, Claude, 59130 Beuvry la Foret (FR); Houard, Robert, 62350 Saint-Floris (FR)
(74) Mandataire: Cabinet Plasseraud

(56) Documents cités:
- WO-A-93/16109
- WO-A-94/17107
- WO-A-97/17376
- WO-A1-94/17107
- DE-A- 2 922 247
- DE-A1- 2 922 247
- J. R. VOSE: "Production and Functionality of Starches and Proteins Isolates from Legumes Seeds (Field Peas and Horsebeans)" CEREAL CHEMISTRY, vol. 57, no. 6, 1980, pages 406-410, XP008017257
- F. MEUSER ET AL.: "Yield of Starch and By-Products in the Processing of Different Varieties of Wrinckled Peas on a Pilot Scale" CEREAL CHEMISTRY, vol. 74, no. 4, 1997, pages 364-370, XP001149013
- 'Marktchancen der Markerbsenstärke, Landwirtschaftsverlag GmbH' SCRIFTENREIHE "NACHWACHSENDE ROHSTOFFE" no. 9, 1997, pages 13,14 - 40,74

## Description

L'invention permet l'extraction et le raffinage des composants de la farine du pois, i.e. l'amidon, les protéines, les fibres internes et les solubles, à l'aide d'au moins un des équipements d'une féculerie de pomme de terre.

L'invention permet ainsi, par l'utilisation d' une féculerie de pomme de terre, d'extraire et de raffiner les composants de la farine de pois sans qu'il ne soit nécessaire d'éliminer au préalable les composants fibres internes du pois.

Au sens de l'invention, on entend par « féculerie de pomme de terre » une unité industrielle d'extraction de la fécule, des protéines et de la pulpe (fibres) de la pomme de terre.

On entend également au sens de l'invention par « équipements d'une féculerie de pomme de terre », les hydrocyclones et les tamis utilisés dans la phase d'extraction de la fécule, et les décanteurs centrifuges utilisés dans la phase d'extraction des protéines des eaux de végétation de la pomme de terre.

L'invention concerne ainsi l'utilisation d'une unité industrielle féculière de traitement de la pomme de terre pour l'extraction et le raffinage des composants de la farine du pois, et plus particulièrement pour la préparation d'amidon de pois, telle que définie à la revendication 1.
Ladite utilisation met en oeuvre au moins un des équipements de ladite unité industrielle, choisi dans le groupe constitué des hydrocyclones, des décanteurs centrifuges et des tamis, sans qu'il ne soit effectué au préalable une étape de séparation des fibres internes du pois.

La description de ces équipements et de leur mise en oeuvre en féculerie de pomme de terre est bien documentée dans l'état de la technique. On peut ainsi se référer par exemple aux brevets EP 443.692 ou EP 517.965 pour l'utilisation en féculerie des hydrocyclones ou au brevet FR 2.256.727 dont la société Demanderesse est propriétaire, pour l'utilisation en féculerie des décanteurs centrifuges.

Il est connu de l'homme du métier que les féculeries de pomme de terre sont actives au mieux pendant 4 à 6 mois par an.

Une préoccupation des industriels est la valorisation de ces équipements féculiers en intercampagne pour assurer l'utilisation du matériel pendant toute l'année.

A la connaissance de la société demanderesse, les seules adaptations des équipements d'une féculerie de pomme de terre à d'autres plantes, dans le but d'utiliser lesdits équipements en intercampagne, avaient pour objectif le traitement du colza ou la valorisation de l'herbe (notamment de la luzerne) ou des fanes de betteraves.

La demande internationale de brevet WO 93/16.109 décrit une adaptation des équipements d'une féculerie de pomme de terre qui concerne le fractionnement, dans des équipements communs et par campagnes alternées, de la pomme de terre et du colza.

Les équipements communs au traitement des deux plantes consistent en une râpe, un décanteur centrifuge, un tamis centrifuge, un cuiseur, un évaporateur, un atomiseur, une centrifugeuse et un séchoir à boucle, auxquels est ajouté un séparateur d'huile pour traiter le colza ou auxquels sont ajoutés un laveur, un décanteur, un cuiseur continu et un filtre rotatif sous vide pour traiter la pomme de terre.

Cependant, l'équipement utilisé normalement pour traiter la pomme de terre est en fait ici plus particulièrement modifié de manière à pouvoir traiter exclusivement les plantes oléagineuses, pour l'extraction d'huile, et cette modification ne saurait donc être adaptée au pois.

En effet, la demande internationale de brevet WO 93/16.109 décrit surtout une modification du procédé de traitement de la pomme de terre pour assurer l'extraction de l'huile et des protéines du colza par le biais d'un traitement enzymatique particulier, et l'ajout d'un matériel spécifique supplémentaire, en l'occurrence ici d'un séparateur d'huile.

Rien ne permet donc de penser que les équipements mis en oeuvre pourraient être transposables au pois, qui n'est pas une plante oléagineuse, alors qu'il est au contraire décrit la possibilité d'adapter ce procédé à d'autres plantes oléagineuses ou oléoprotéagineuses comme le tournesol, le soja ou le lin.

Les demandes internationales de brevet WO 00/40.787 et WO 00/40.788 décrivent une autre adaptation des équipements de féculerie de pomme de terre à d'autres plantes pour la valorisation de l'herbe ou de plantes génétiquement modifiées.

Cette adaptation, qui utilise le matériel de broyage et de tamis coniques centrifuges des équipements de féculerie de pomme de terre, permet de récupérer surtout les fractions fibres des plantes telles que l'herbe, les fanes de pommes de terre, les fanes de pois ou les feuilles et collets de betteraves.

Les jus de pressage de ces plantes sont traités par floculation, comme les eaux rouges des pommes de terre, pour en extraire d'une part les protéines sous forme d'isolats et d'autre part un sirop de sucre.

Le traitement de plantes génétiquement modifiées décrit dans la demande de brevet internationale WO 00/40.788 est envisagé pour la récupération de molécules d'intérêt thérapeutique dans les jus de pressage.

Les procédés décrits dans ces deux demandes internationales de brevet visent aussi à valoriser les matières végétales habituellement déclassées pour en récupérer la partie fibre, essentiellement pour des applications papetières (fabrication de pâtes à papier).

La demande internationale de brevet WO 00/40.787 évoque bien le traitement du pois, mais uniquement pour la partie herbeuse de celui-ci, i.e. les fanes.

Les contraintes technologiques liées à la séparation de l'amidon et des protéines de la graine du pois sont d'un tout autre ordre que celles rencontrées pour la séparation des sucres et des protéines des jus de pressage des fanes de pois.

Le pois est un légume dont le contenu des graines en protéines varie de 25 à 35 %, le contenu en amidon entre 35 et 50 %, le contenu en fibres (cellulose et hémicellulose) varie entre 12 et 18 %, le contenu en solubles varie entre 8 et 12 % et la teneur en lipides varie entre 1 et 2 %.

Le pois, tout comme la féverole, a été historiquement utilisé comme produit de substitution du soja pour sa richesse en protéines, destiné à l'alimentation du bétail.

Environ 95 % de ses applications se retrouvent ainsi dans l'alimentation du bétail et des volailles comme source d'acides aminés essentiels comme la lysine.

C'est la raison pour laquelle, les procédés d'extraction et de raffinage des composants du pois ne visent traditionnellement que sa partie protéique.

Cependant, l'amidon de pois, riche en amylose, peut être valorisé pour certaines applications alimentaires et non alimentaires pour peu qu'il soit suffisamment raffiné.

Les fibres internes du pois peuvent être également utilisées dans certaines applications alimentaires (pouvoir élevé de rétention d'eau, pouvoirs liant et stabilisant), voire pharmaceutiques, sous réserve d'un raffinage suffisant.

La plupart des procédés classiques d'extraction des composants du pois visant la partie protéique, l'amidon et les fibres ne sont donc isolés que de façon indirecte et dans un état de raffinage insuffisant.

Comme le décrit en toute généralité VOSE et al dans une revue de Cereal Chemistry, 1980, 57(6), pp 406-416, les spécialistes du domaine de l'extraction des composants du pois utilisent les développements techniques basés sur le procédé classique en voie humide du traitement du maïs, combinés avec des technologies elles-mêmes dérivées de l'industrie des isolats de graines de soja.

La première étape des procédés d'extraction des protéines du pois consiste soit à mettre à tremper le pois dans de l'eau, puis à le broyer en phase humide, soit à préparer une farine à partir de pois préalablement nettoyés, triés, émondés, dépoussiérés et broyés, puis à placer la farine ainsi obtenue dans de l'eau.

Il est connu que les protéines de pois ne présentent qu'une solubilité de 85 % dans l'eau à pH neutre, et que la solubilité desdites protéines est d'autant plus élevée que le pH de la suspension augmente.

Dans ces procédés de l'art antérieur, on amène donc ladite suspension de pois avant broyage ou le lait de farine issue de pois broyés à un pH de 9 par ajout de chaux ou de soude, pour solubiliser les protéines à plus de 95 % (technique dite de « trempe alcaline »).

La centrifugation de cette suspension de farine conduit à obtenir deux fractions.

La fraction légère correspond à la solution protéique qu'il faut sécher ou atomiser pour obtenir un concentrat protéique présentant une richesse en protéines de l'ordre de 60 %.

La fraction lourde renferme l'amidon avec cependant encore 6 % de protéines.

Il est donc nécessaire de recommencer une étape de trempe alcaline de cette fraction riche en amidon pour en retirer les protéines associées, et tenter d'obtenir une fraction contenant essentiellement de l'amidon.

Même dans ces conditions, la fraction amidon de pois renferme encore de l'ordre de 2 % en protéines résiduelles, ce qui est loin d'être satisfaisant ; un degré de pureté suffisant peut être estimé à une teneur d'au plus 0,5 % en protéines résiduelles.

Pour remédier au problème d'obtention de protéines de pois de meilleure qualité, d'autres techniques sont décrites qui conduisent plutôt à la production d'isolats de protéines de pois.

Ces isolats de protéines de pois sont en fait obtenus par une opération de précipitation sélective des protéines à leur pH isoélectrique ou pI (par coagulation) à température ambiante ou à température plus élevée (jusqu'au point d'ébullition), mais aussi par l'utilisation de solvants organiques ou encore par l'utilisation de milieux à forte force ionique.

Ces isolats peuvent être également obtenus par des techniques membranaires de type ultrafiltration.

Comme illustration de ces techniques de précipitation des protéines à leur pI, on trouve par exemple dans l'état de la technique le brevet DD 275.609.

Dans le procédé décrit par ce brevet, les protéines sont d'abord extraites à un pH alcalin par traitement en voie humide à la chaux de la farine de pois, puis les protéines sont précipitées à leur pI par abaissement du pH du milieu à l'acide phosphorique à une valeur de l'ordre de 4,6.

Ce procédé est loin d'être satisfaisant, car le surnageant renfermant les protéines encore solubles doit être retraité à la chaux pour éliminer l'acide phosphorique en excès puis chauffé à une température comprise entre 80 et 150°C pour être recyclé et réutilisé lors d'extractions futures.

Les protéines isolées sont plus pures, mais cela s'effectue au détriment des rendements de récupération en protéines et la richesse des fractions amidon et fibres internes n'est pas améliorée pour autant.

Le caractère fastidieux et la lourdeur de ce procédé ne le rendent pas particulièrement attractif au point de vue industriel.

Le brevet US 4.766.204 décrit un procédé qui permet de mieux séparer les protéines de l'amidon (ou des sucres) de légumineuses comme le pois ou les fèves, en s'affranchissant partiellement du traitement alcalin.

Ce procédé consiste à mettre en suspension la farine de la légumineuse finement broyée dans de l'eau à un pH compris entre 2 et 10.

Les inventeurs de ce brevet conseillent cependant de mettre la farine en suspension dans un milieu acide (pH préféré compris entre 2,2 et 3,2) pour éviter le développement d'odeurs ou de saveurs désagréables dans les protéines récupérées à la fin du procédé d'extraction.

Ensuite, on soumet cette suspension de farine acidulée à une première étape de tamisage pour éliminer les fibres internes du pois.

Cette première étape est rendue nécessaire par le fait que les fibres internes du pois se lient très facilement à l'amidon et aux protéines du pois. Il faut alors multiplier les lavages de ces fibres afin d'en extraire l'amidon ou les protéines associées.

En préalable à toutes les étapes d'extraction et de séparation de l'amidon et des protéines proprement dites, il est fortement conseillé d'éliminer la fraction fibres internes le plus rapidement possible dans les premières étapes des procédés mis en oeuvre.

Après cette étape de tamisage, on effectue une centrifugation de la suspension débarrassée des fibres internes pour générer une « phase légère » contenant majoritairement les protéines, et une « phase lourde » contenant majoritairement l'amidon.

Enfin, il faut ajuster le pH de ces phases légère et lourde de manière à en isoler respectivement les protéines et l'amidon.

Pour la phase légère, le pH est ramené entre 4,4 et 4,6, intervalle de pH connu pour faire précipiter les protéines du pois à leur point isoélectrique.

Il faut effectuer un nouveau traitement alcalin de la phase lourde (renfermant encore un peu de protéines) pour solubiliser les protéines résiduelles. On propose ensuite de centrifuger à nouveau le mélange ainsi traité par des décanteurs ou centrifugeurs verticaux ou par une série d'hydrocyclones, ceci afin de récupérer une fraction d'amidon plus "propre".

Les protéines résiduelles sont à leur tour coagulées séparément et ajoutées à la fraction principale des protéines obtenues plus en amont dans le procédé.

Ce procédé nécessite tout d'abord de mettre en place une batterie de nombreux tamis afin d'éliminer la fraction fibres internes, préalable indispensable à la séparation des protéines et de l'amidon de pois.

La difficulté de mise en oeuvre de ces tamis, leur fréquence de nettoyage et leur coût de maintenance ne rendent pas cette étape de tamisage industriellement viable.

Il est par ailleurs nécessaire de gérer avec beaucoup de précision les variations de pH des différentes fractions, et cela complexifie à outrance l'usage des batteries de décanteurs, de centrifugeurs et d'hydrocyclones.

Quant à l'extraction de l'amidon en tant que composant principal du pois, peu de travaux lui sont consacrés, malgré ses nombreuses possibilités d'applications, étant donné sa richesse relative en amylose.

Le rendement en amidon des variétés de pois est de loin inférieur au rendement à l'hectare d'espèces telles que le maïs, le blé ou la pomme de terre. Le pois n'est donc pas une légumineuse considérée avec attention par les amidonniers.

MEUSER et al, dans CEREAL CHEMISTRY, 74(4), pp 364 - 370 (1997) ont décrit un procédé pilote se proposant d'extraire l'amidon du pois et l'ont présenté comme industriellement rentable.

Le procédé, en trois étapes principales, consiste à conduire la trempe du pois dans de l'eau, à décortiquer le pois humide et à désintégrer les protéines adhérant aux granules d'amidon grâce à un homogénéisateur à haute pression.

Les fibres sont tout d'abord éliminées à partir du broyat de pois humide au moyen de tamis vibrants, avant le passage sur homogénéisateur à haute pression.

On constate encore une fois la nécessité d'éliminer les fibres internes du pois avant d'entreprendre l'extraction proprement dite des composants amidon et protéines.

La suspension ainsi débarrassée des fibres renferme alors des particules de protéines insolubles, des particules constituées d'un mélange d'amidon et de protéines, et des protéines solubles.

A cette étape du procédé, un décanteur centrifuge sépare les protéines insolubles (dans la phase légère) des protéines solubles et des particules d'amidon et de protéines (dans la phase lourde).

La phase lourde est alors acheminée vers l'homogénéisateur à haute pression afin de rompre les agglomérats de particules d'amidon et leurs protéines associées.

La suspension traitée sur cet homogénéisateur est ensuite transférée sur hydrocyclones en utilisant de l'eau à contre-courant pour séparer les protéines de l'amidon.

Ce procédé, axé sur la récupération de l'amidon, est particulièrement lourd si l'on souhaite le mettre en oeuvre également pour la récupération concomitante des protéines.

Il faut en effet rassembler les phases légères issues des hydrocyclones, les phases légères issues du décanteur centrifuge plus les flux issus du pressage des fibres pour récupérer le maximum des protéines insolubles.

Il est enfin nécessaire de reprendre les phases lourdes issues des hydrocyclones, de les centrifuger, et d'ultrafiltrer les phases légères issues de cette centrifugation pour récupérer les protéines solubles.

Les protéines solubles doivent être encore extraites par des techniques du type coagulation au pH isoélectrique ou à la chaleur ou encore par ultrafiltration.

De tout ce qui précède, il apparaît qu'il n'existe pas de procédé simple, intégrant les contraintes technologiques liées à l'extraction des quatre composants principaux du pois, i.e. l'amidon, les protéines, les fibres internes et les solubles, notamment l'extraction de l'amidon et des protéines, et ce, à un haut degré de pureté, avec les meilleurs rendements et productivités.

WO 94 / 17107 décrit un procédé de préparation d'un produit contenant de l'amylose. WO 97 / 17376 décrit un procédé d'obtention d'amidon de pois.

Il est du mérite de la société Demanderesse d'avoir réussi à concilier ces objectifs difficilement conciliables en imaginant et élaborant, au prix de nombreuses recherches, un procédé simple et efficace d'extraction et de raffinage des composants de la farine du pois.

Il est également du mérite de la société Demanderesse d'avoir montré que l'utilisation des décanteurs centrifuges ou des hydrocyclones dans une configuration utilisée dans une féculerie de pomme de terre, permet de s'affranchir de l'obligation d'éliminer les fibres internes du pois avant d'entreprendre toutes les étapes proprement dites de fractionnement des protéines de l'amidon et des solubles.

L'utilisation d'une unité industrielle féculière de traitement de la pomme de terre selon l'invention est caractérisée en ce que l'extraction et le raffinage des composants de la farine de pois consiste à préparer la farine de pois par broyage de pois secs préalablement nettoyés, triés, émondés, dépoussiérés, placer la farine ainsi obtenue dans de l'eau et séparer les composants de la farine de pois à l'aide d'au moins un des équipements choisi dans le groupe constitué des hydrocyclones, des décanteurs centrifuges et des tamis sans qu'il soit effectué au préalable une étape de séparation des fibres internes du pois.

Dans un premier mode préférentiel conforme à l'invention, on choisit de mettre en oeuvre comme équipements de féculerie de pomme de terre, des décanteurs centrifuges et des tamis.

Dans une première étape de ce mode préférentiel, la farine obtenue à partir de pois préalablement nettoyés, triés, émondés, dépoussiérés et broyés est mise en suspension dans de l'eau.

La farine de pois est obtenue à partir de pois préalablement nettoyés, triés, émondés, dépoussiérés par toute technique connue par ailleurs de l'homme du métier. On choisit avantageusement un broyeur à marteaux de type ALPINE, équipé d'une grille de 100 µm, comme il sera exemplifié ci-après.

Il est avantageusement choisi de mettre ensuite en suspension dans de l'eau une farine présentant une granulométrie moyenne d'une valeur au plus égale à 100 µm, à la concentration de 20 à 30 % en poids sec, de préférence à 25 % de poids sec.

Le pH de la solution n'est pas un facteur limitant, mais il est choisi avantageusement de ne pas rectifier le pH de la suspension, ce qui conduit à travailler dans une gamme de pH compris entre 6,2 et 7.

Dans une deuxième étape de ce mode préférentiel, il est avantageusement choisi de soumettre directement ladite suspension aqueuse de farine à l'action d'un décanteur centrifuge.

La fraction fibres du pois n'est donc pas éliminée par tamisage préalable.

La société Demanderesse a en effet constaté que le fait de réaliser cette opération de séparation avec des décanteurs centrifuges selon une configuration mise en oeuvre dans une féculerie de pomme de terre, permet de séparer facilement dans deux fractions distinctes, les solubles et les protéines d'une part, et les fibres et l'amidon d'autre part.

Dans une troisième étape de ce mode préférentiel, les protéines sont alors facilement isolées de la fraction renfermant le mélange de solubles et de protéines ainsi obtenu, par une technique choisie dans le groupe des techniques de précipitation des protéines à leur pH isoélectrique et/ou de séparation membranaire de type ultrafiltration.

Les solubles sont alors récupérés en tant que tels dans le surnageant de précipitation ou dans le perméat d'ultrafiltration.

Dans une quatrième étape de ce mode préférentiel, on sépare l'amidon des fractions fibres internes, en utilisant des tamis de la féculerie.

Il est avantageusement choisi des opérations de tamisages sur des tamis rotatifs et tamis courbes.

Cette étape permet ainsi de séparer plus efficacement les fibres internes de l'amidon, et avec peu de tamis et ainsi beaucoup moins de difficultés de maintenance des équipements que dans les procédés déjà décrits où les tamis sont placés en tête de procédé, et doivent ainsi traiter la totalité du flux.

L'amidon purifié est ensuite récupéré et concentré à partir de la fraction débarrassée des fibres par toute technique connue par ailleurs de l'homme du métier.

Dans un deuxième mode préférentiel conforme à l'invention, on choisit de mettre en oeuvre comme équipements de féculerie de pomme de terre, les hydrocyclones et des décanteurs centrifuges.

Dans une première étape de ce deuxième mode préférentiel, la farine obtenue à partir de pois préalablement nettoyés, triés, émondés, dépoussiérés et broyés est également mise en suspension dans de l'eau.

Le pH de la solution n'est pas un facteur limitant, mais on choisit de ne pas rectifier le pH de la suspension, ce qui conduit à travailler dans une gamme de pH compris entre 6,2 et 7.

On laisse diffuser la suspension dans ce milieu aqueux dans un temps court, compris entre 5 min et 2 heures, à une température comprise entre 15°C et 25°C, préférentiellement à température ambiante.

Dans une deuxième étape de deuxième mode préférentiel, on choisit de soumettre directement ladite suspension aqueuse de farine à une batterie d'hydrocyclones sans éliminer la fraction fibres du pois par tamisage préalable.

La société Demanderesse a ainsi constaté que le fait de choisir cette opération de séparation avec des hydrocyclones selon une configuration mise en oeuvre dans une féculerie de pomme de terre, permet de séparer facilement dans deux fractions distinctes, l'amidon de haute pureté d'une part, et les solubles, les fibres et les protéines d'autre part.

Dans une troisième étape de ce deuxième mode préférentiel, on concentre éventuellement la suspension riche en amidon sur lesdits hydrocyclones de manière à en purifier l'amidon.

Cette opération peut être réalisée également à l'aide d'une autre batterie d'hydrocyclones.

Cependant, comme il sera exemplifié ci-après, la société Demanderesse a constaté de façon surprenante et inattendue que le degré de pureté de la fraction amidon directement obtenue par la mise en oeuvre des hydrocyclones est telle que cette fraction amidon ne nécessite une étape de raffinage supplémentaire que si l'on souhaite obtenir un amidon ne renfermant pas plus de 0,2 % de protéines résiduelles.

Dans une quatrième étape de ce deuxième mode préférentiel, on sépare facilement les fibres internes d'une fraction riche en protéines et en solubles par l'utilisation des décanteurs centrifuges selon une configuration mise en oeuvre dans le traitement des eaux de végétation de la pomme de terre.

Dans une cinquième étape de ce deuxième mode préférentiel, on isole facilement les protéines de la fraction renfermant le mélange de solubles et de protéines ainsi obtenu, par une technique choisie dans le groupe des techniques de précipitation des protéines à leur pH isoélectrique et des techniques de séparation membranaire de type ultrafiltration.

L'invention met ainsi en oeuvre un dispositif d'extraction et de raffinage des composants de la farine de pois comprenant au moins un des équipements d'une féculerie de pomme de terre, choisi dans le groupe constitué des hydrocyclones, des décanteurs centrifuges et des tamis.

Un premier dispositif comprend comme équipements d'une féculerie de pomme de terre, des tamis et des décanteurs centrifuges.

Un deuxième dispositif comprend comme équipements d'une féculerie de pomme de terre, des hydrocyclones et des décanteurs centrifuges.

L'utilisation de ces dispositifs permet d'obtenir des fractions d'une grande richesse avec un rendement excellent.

On a ainsi constaté que l'on pouvait extraire plus de 90 % des protéines initialement présentes, et obtenir l'amidon avec une pureté d'au moins 99,5 %.

Des mesures du taux de protéines résiduelles, du pH et de la viscosité BRABENDER de l'amidon de pois obtenu selon le procédé conforme à l'invention ont été effectuées.

L'amidon préparé par l'utilisation conforme à l'invention présente une teneur en protéines résiduelles comprise entre 0,3 et 0,5 % et une valeur de pH comprise entre 3,5 et 7, de préférence comprise entre 5 et 7.

La méthode de détermination de la teneur en protéines employée ici est celle de DUMAS (norme NF V 18-120 de mars 1977 - méthode par combustion - Dosage de l'azote).

On détermine le pH de l'amidon de pois, à température ambiante, sur une solution contenant 20 g sec dans 80 ml d'eau déminéralisée.

L'amidon préparé par l'utilisation conforme à l'invention présente en outre une viscosité BRABENDER, déterminée selon un test A, comprise entre 950 et 1100 UB, de préférence entre 970 et 1050 UB.

Le test A est un test mis au point par la société Demanderesse, qui consiste à déterminer la viscosité en milieu sodique d'une suspension de matière amylacée à l'aide du viscosigraphe BRABENDER.

Cette mesure de viscosité est effectuée dans des conditions de concentration précise et suivant une programmation adaptée température / temps.

La description de ce test est la suivante : on prépare 20,9 g de l'amidon de pois sec et on lui ajoute 48 g d'une solution d'hydroxyde de sodium 1 N et 470 g d'eau déminéralisée dont la résistivité est supérieure à 500.000 ohms, dans un Becher de 600 ml.

On effectue ce mélange à température ambiante dans le bol du viscosimètre BRABENDER Pt100. Puis on effectue, en utilisant ledit appareillage, un chauffage rapide du mélange jusqu'à 35°C, à raison de 3°/min. On maintient à cette température pendant 5 minutes, puis effectue une montée de température à raison de 2,5°/min pour atteindre 92°C. Cette température est maintenue pendant 20 min.

La viscosité, exprimée en Unités BRABENDER (UB), correspond alors à la valeur du pic de viscosité mesurée.

D'autres caractéristiques et avantages de la présente invention apparaîtront clairement à la lecture des exemples donnés ci-après qui viennent illustrer l'invention sans toutefois la limiter.

### Exemple 1

De la farine de pois est préparée par broyage de pois fourragers décortiqués sur broyeur à marteaux de type ALPINE équipé d'une grille de 100 µm.

300 kg de farine à 87 % de matière sèche sont ensuite mis à tremper dans de l'eau à la concentration finale de 25 % sur sec, à un pH de 6,5, pendant 30 minutes à température ambiante.

1044 kg de suspension de farine à 25 % de matière sèche (soit donc 261 kg de farine sèche) sont alors introduits avec 500 kg d'eau dans une batterie d'hydrocyclones adaptée d'une unité industrielle féculière de traitement de la pomme de terre.

Cette batterie d'hydrocyclones est composée de 14 étages. Elle est alimentée par la suspension de farine à l'étage n°5.

Cette séparation conduit à l'obtention d'une phase légère qui correspond à la sortie de l'étage n°1. Elle est constituée du mélange protéines, fibres internes et solubles.

La phase lourde, renfermant l'amidon est le concentré obtenu au niveau de l'étage n°14.

On alimente l'entrée de l'étage n°14 avec de l'eau de lavage.

Cette séparation sur hydrocyclones conduit à l'obtention d'une phase légère, constituée du mélange de protéines, fibres internes et solubles, et d'une phase lourde composée de l'amidon de pois.

On récupère dans la phase lourde 297 kg de lait d'amidon à 40 % de matière sèche (soit donc 119 kg d'amidon sur sec).

La teneur en impuretés est inférieure à 1 %, la teneur en protéines est de 0,3 % sur sec.

Il n'est donc pas nécessaire de procéder à un raffinage complémentaire de cette fraction.

La phase légère en sortie d'hydrocyclones renferme quant à elle en mélange (142 kg sur sec au total) : les fibres (environ 14,8 % en poids, soit 21 kg sec), les protéines (environ 42,8 % en poids, soit 60,8 kg sec) et de solubles (environ 42,4 % en poids, soit 60,2 kg sec).

On l'amène ensuite à une matière sèche de 11,4 %.

On procède à la séparation des fibres sur décanteurs centrifuges de type WESPHALIA employés dans une unité industrielle féculière de traitement de la pomme de terre.

La phase légère en sortie de décanteur centrifuge renferme un mélange de protéines et de solubles, tandis que la phase lourde renferme les fibres de pois.

La phase lourde renferme 105 kg de fibres à 20 % de matière sèche. On constate que la quasi-totalité des fibres est bien retrouvée dans cette fraction.

Quant à la fraction protéines et solubles, elle renferme 1142 kg d'un mélange en solution de solubles et de protéines.

On procède à la coagulation des protéines à leur point isoélectrique par ajustement de la phase légère de sortie de décanteur centrifuge à un pH de 4,6 et chauffage à 100°C de cette solution.

Après précipitation des protéines, on procède à une décantation centrifuge, qui permet de récupérer, après séchage, du sédiment renfermant 56 kg de protéines (86 % de N 6,25 sur sec) à 93 % de matière sèche.

### Exemple 2

On détermine les caractéristiques physicochimiques de l'amidon de pois préparé suivant le procédé décrit dans l'exemple 1 reproduit quatre fois.

Le tableau suivant présente les résultats obtenus de la teneur en protéines, du pH et de la viscosité suivant le test A déterminé sur les quatre échantillons ainsi obtenus.

Caractérisations physicochimiques de 4 échantillons d'amidon de pois extraits en suivant un procédé conforme à l'invention.

| | Echantillon 1 | Echantillon 2 | Echantillon 3 | Echantillon 4 |
|---|---|---|---|---|
| Teneur en protéines résiduelles (%) | 0,3 | 0,45 | 0,5 | 0,45 |
| pH | 6,9 | 5,8 | 5, 2 | 5, 6 |
| Viscosité (UB) | 1010 | 970 | 1030 | 1050 |

Ces résultats montrent que l'amidon de pois, obtenu directement après l'étape de passage sur hydrocyclones, présente une teneur en protéines résiduelles tout à fait satisfaisante, et une valeur de pH qui traduit le traitement sans rectification du pH de la suspension de farine en amont du procédés.

Des mesures effectuées sur des amidons de pois accessibles du commerce donnent des teneurs en protéines comprises entre 0,18 et 0,25 %, mais des valeurs de pH de l'amidon de pois en solution inférieur à 3,5 ou supérieur à 7.

L'amidon de pois obtenu selon l'utilisation conforme à l'invention est ainsi tout à fait original par rapport aux autres amidons de pois.

Par ailleurs, il est remarquable que les amidons de pois préparés selon l'utilisation conforme à l'invention présentent des viscosités comprises entre 970 et 1050 UB, alors que des mesures effectuées sur des amidons de pois commercialisés en suivant le test A montrent des valeurs de viscosité supérieures à 1280 UB.

## Revendications

1. Utilisation d'une unité industrielle féculière de traitement de la pomme de terre pour l'extraction et le raffinage des composants de la farine de pois **caractérisée en ce que** l'extraction et le raffinage des composants de la farine de pois consistent dans les étapes suivantes :
a) préparer une farine par broyage de pois secs préalablement nettoyés, triés, émondés, dépoussiérés,
b) placer la farine ainsi obtenue dans de l'eau,
c) séparer les composants de la farine de pois à l'aide d'au moins un des équipements de ladite unité industrielle féculière, choisi dans le groupe constitué des hydrocyclones, des décanteurs centrifuges et des tamis, sans qu'il ne soit effectué au préalable une étape de séparation des fibres internes du pois.

2. Utilisation selon la revendication 1 pour la préparation d'amidon de pois.

3. Utilisation selon la revendication 1 ou 2, **caractérisée en ce que** les équipements sont constitués des décanteurs centrifuges et des tamis.

4. Utilisation selon la revendication 3, **caractérisé en ce** l'extraction et le raffinage consistent dans la succession des étapes suivantes:
a) mettre en suspension la farine de pois dans de l'eau,
b) fractionner la dite suspension sur des décanteurs centrifuges, de manière à isoler une fraction riche en protéines et solubles d'une fraction constituée du mélange amidon et fibres internes,
c) isoler le composant protéique de la dite fraction riche en protéines et solubles par une technique de purification sélective des protéines,
d) traiter la fraction constituée du mélange d'amidon et de fibres internes sur des tamis de manière à séparer une fraction riche en fibres internes d'une fraction riche en amidon,
e) isoler le composant amidon de la dite fraction riche en amidon.

5. Utilisation selon la revendication 4, **caractérisée en ce que** la farine de pois est mise en suspension dans de l'eau sans rectifier le pH de la suspension, ce qui conduit à un pH compris entre 6,2 et 7.

6. Utilisation selon la revendication 1 ou 2, **caractérisée en ce que** les équipements sont constitués des hydrocyclones et des décanteurs centrifuges.

7. Utilisation selon la revendication 6, **caractérisée en ce** consiste que l'extraction et le raffinage dans la succession des étapes suivantes :
a) mettre en suspension la farine de pois dans de l'eau,
b) fractionner la dite suspension sur des hydrocyclones, de manière à isoler une fraction riche en amidon d'une fraction constituée du mélange protéines, fibres internes et solubles,
c) concentrer éventuellement la suspension riche en amidon sur lesdites hydrocyclones de manière à en purifier l'amidon,
d) traiter la fraction constituée du mélange de protéines, de fibres internes et de solubles sur des décanteurs centrifuges de manière à séparer une fraction riche en fibres internes d'une fraction riche en protéines et solubles,
e) isoler le composant protéique de la dite fraction riche en protéines et solubles par une technique de purification sélective des protéines.

8. Utilisation selon la revendication 7, **caractérisée en ce que** la farine de pois est mise en suspension dans de l'eau sans rectifier le pH de la suspension, ce qui conduit à un pH compris entre 6,2 et 7.

9. Utilisation selon la revendication 8, **caractérisée en ce que** la farine de pois est mise en suspension dans de l'eau pendant un temps court, compris entre 5 min et 2 heures, à une température comprise entre 15°C et 25 °C, de préférence à température ambiante.

10. Utilisation selon l'une quelconque des revendications 1 à 9, **caractérisée en ce que** les protéines sont purifiées par l'utilisation d'une technique choisie dans le groupe des techniques de précipitation des protéines à leur pH isoélectrique et de séparation membranaire de type ultrafiltration.

11. Utilisation selon la revendication 2, **caractérisée en ce que** l'amidon de pois présente :
- une teneur en protéines résiduelles comprise entre 0,3 et 0,5 %,
- une valeur de pH comprise entre 3,5 et 7, de préférence entre 5 et 7.

12. Utilisation selon la revendication 11, **caractérisée en ce que** l'amidon de pois présente une viscosité, déterminée selon un test A, comprise entre 950 et 1100 UB, de préférence entre 970 et 1050 UB.

## Patentansprüche

1. Verwendung einer zur Kartoffelbearbeitung vorgesehenen industriellen Stärkeeinheit zur Extraktion und Raffination von Erbsenmehlbestandteilen **dadurch gekennzeichnet, dass** die Extraktion und die Raffination der Erbsenmehlbestandteile aus den folgenden Schritten bestehen:
a) Herstellen eines Mehls durch Mahlen trockener Erbsen, die zuvor gereinigt, verlesen, enthäutet und entstaubt worden sind,
b) Geben des so gewonnenen Mehls in Wasser,
c) Trennen der Bestandteile des Erbsenmehls mittels wenigstens einer der Einrichtungen der industriellen Stärkeeinheit, welche aus der Gruppe bestehend aus Hydrozyklonen, Zentrifugalabscheidern und Sieben ausgewählt wird, ohne dass vorab ein Schritt des Trennens der inneren Fasern der Erbse durchgeführt wird.

2. Verwendung gemäß Anspruch 1 zur Herstellung von Erbsenstärke.

3. Verwendung gemäß Anspruch 1 oder 2, **dadurch gekennzeichnet, dass** die Einrichtungen aus Zentrifugalabscheidern und Sieben bestehen.

4. Verwendung gemäß Anspruch 3, **dadurch gekennzeichnet, dass** die Extraktion und Raffination aus der Abfolge der folgenden Schritte besteht:
a) In-Suspension-Bringen des Erbsenmehls in Wasser,
b) Fraktionieren der Suspension in Zentrifugalabscheidern, so dass eine an Eiweißstoffen und löslichen Stoffen reiche Fraktion von einer Fraktion, welche aus dem Gemisch von Stärke und inneren Fasern besteht, isoliert wird,
c) Isolieren des eiweißhaltigen Bestandteils der an Eiweißstoffen und löslichen Stoffen reichen Fraktion durch eine Technik der selektiven Reinigung der Eiweißstoffe,
d) Behandeln der aus dem Gemisch von Stärke und inneren Fasern bestehenden Fraktion auf Sieben, so dass eine an inneren Fasern reiche Fraktion von einer stärkereichen Fraktion abgetrennt wird,
e) Isolieren des Stärkebestandteils aus der stärkereichen Fraktion.

5. Verwendung gemäß Anspruch 4, **dadurch gekennzeichnet, dass** das Erbsenmehl in Wasser in Suspension gebracht wird, ohne den pH der Suspension einzustellen, was zu einem pH zwischen 6,2 und 7 führt.

6. Verwendung gemäß Anspruch 1 oder 2, **dadurch gekennzeichnet, dass** die Einrichtungen aus Hydrozyklonen und Zentrifugalabscheidern bestehen.

7. Verwendung gemäß Anspruch 6, **dadurch gekennzeichnet, dass** die Extraktion und die Raffination aus der Abfolge der folgenden Schritte besteht:
a) In-Suspension-Bringen des Erbsenmehls in Wasser,
b) Fraktionieren der Suspension in Hydrozyklonen, so dass eine stärkereiche Fraktion von einer Fraktion, welche aus einem Gemisch von Eiweißstoffen, inneren Fasern und löslichen Stoffen besteht, isoliert wird,
c) gegebenenfalls Konzentrieren der stärkereichen Suspension in den Hydrozyklonen, so dass die enthaltene Stärke gereinigt wird,
d) Behandeln der aus dem Gemisch von Eiweißstoffen, inneren Fasern und löslichen Stoffen bestehenden Fraktion in Zentrifugalabscheidern, so dass eine an inneren Fasern reiche Fraktion von einer an Eiweißstoffen und löslichen Stoffen reichen Fraktion abgetrennt wird,
e) Isolieren des eiweißhaltigen Bestandteils aus der an Eiweißstoffen und löslichen Stoffen reichen Fraktion durch eine Technik der selektiven Reinigung der Eiweißstoffen.

8. Verwendung gemäß Anspruch 7, **dadurch gekennzeichnet, dass** das Erbsenmehl in Wasser in Suspension gebracht wird, ohne den pH der Suspension einzustellen, was zu einem pH zwischen 6,2 und 7 führt.

9. Verwendung gemäß Anspruch 8, **dadurch gekennzeichnet, dass** das Erbsenmehl kurz zwischen 5 Minuten und zwei Stunden bei einer Temperatur zwischen 15°C und 25°C, bevorzugt bei Umgebungstemperatur, in Wasser in Suspension gebracht wird.

10. Verwendung gemäß einem der Ansprüche 1 bis 9, **dadurch gekennzeichnet, dass** die Eiweißstoffe unter Verwendung einer Technik gereinigt werden, welche aus der Gruppe von Techniken bestehend aus Ausfallen der Eiweißstoffe bei ihrem isoelektrischen pH und Membran-Separation vom Typ Ultrafiltration, ausgewählt wird.

11. Verwendung gemäß Anspruch 2, **dadurch gekennzeichnet, dass** die Erbsenstärke:
- einen Gehalt an zwischen 0,3 und 0,5%,
- einen pH-Wert zwischen 3,5 und 7, bevorzugt zwischen 5 und 7, aufweist.

12. Verwendung gemäß Anspruch 11, **dadurch gekennzeichnet, dass** die Erbsenstärke eine gemäß eines Tests A gemessene Viskosität zwischen 950 und 1100 UB, bevorzugt zwischen 970 und 1050 UB aufweist.

## Claims

1. Use of an industrial starch unit for the treatment of potato for extracting and refining the components of pea flour, **characterised in that** the extracting and refining of the components of pea flour consist in the following steps:
a) preparing a flour by grinding dried peas which have been previously cleaned, sorted, blanched, freed of dust,
b) placing the flour thus obtained in water,
c) separating the components of the pea flour using at least one of the pieces of equipment from said potato industrial starch unit selected from the group consisting of hydrocyclones, centrifugal decanters and sieves, without a step for separating the internal fibres of the pea being carried out beforehand

2. Use according to claim 1 for preparing pea starch.

3. Use according to claim 1 or 2, **characterised in that** the pieces of equipment consist of centrifugal decanters and sieves.

4. Use according to claim 3, **characterised in that** the extracting and refining consist in the succession of the following steps:
a) suspending the pea flour in water,
b) fractionating said suspension on centrifugal decanters, so as to isolate a fraction rich in proteins and solubles from a fraction consisting of the mixture of starch and internal fibres,
c) isolating the protein component of said fraction rich in proteins and solubles by a selective protein purification technique,
d) treating the fraction consisting of the mixture of starch and internal fibres on sieves so as to separate a fraction rich in internal fibres from a fraction rich in starch,
e) isolating the starch component of said fraction rich in starch.

5. Use according to claim 4, **characterised in that** the pea flour is suspended in water without correcting the pH of the suspension, resulting in a pH of between 6.2 and 7.

6. Use according to claim 1 or 2, **characterised in that** the pieces of equipment consist of hydrocyclones and centrifugal decanters.

7. Use according to claim 6, **characterised in that** the extracting and refining consist in the succession of the following steps:
a) suspending the pea flour in water,
b) Sectioning said suspension on hydrocyclones, so as to isolate a fraction rich in starch from a fraction consisting of the mixture of proteins, internal fibres and solubles,
c) optionally concentrating the suspension rich in starch on said hydrocyclones so as to purify the starch thereof,
d) treating the fraction consisting of the mixture of proteins, internal fibres and solubles on centrifugal decanters so as to separate a fraction rich in internal fibres from a fraction rich in proteins and solubles,
e) isolating the protein component of said fraction rich in proteins and solubles by a selective protein purification technique.

8. Use according to claim 7, **characterised in that** the pea flour is suspended in water without correcting the pH of the suspension, resulting in a pH of between 6.2 and 7.

9. Use according to claim 8, **characterised in that** the pea flour is suspended in water for a short time of between 5 min and 2 hours, at a temperature of between 15°C and 25°C, preferably at ambient temperature.

10. Use according to any one of claims 1 to 9, **characterised in that** the proteins are purified using a technique selected from the group of techniques for the precipitation of proteins at their isoelectric pH and of membrane separation of the ultrafiltration type.

11. Use according to claim 2, **characterised in that** the pea starch has:
- a residual protein content of between 0.3 and 0.5 %,
- a pH value of between 3.5 and 7, preferably of between 5 and 7.

12. Use according to claim 11, **characterised in that** the pea starch has a viscosity, determined according to a test A, of between 950 and 1,100 BU, preferably of between 970 and 1,050 BU.
